# EUROPEAN PATENT APPLICATION

(11) **EP 3 604 832 A1**
(43) Date of publication of application: **05.02.2020**
(21) Application number: 18186928.0
(22) Date of filing: 01.08.2018
(51) Int. Cl.: F16B 27/00

(54) **SCREW STRUCTURE**

(71) Applicant: Yow Tay Collated Screw Industrial Co., Ltd., Tainan City (TW); Zhongshan Jiazhan Electric Co., Ltd., Zhongshan City, Guangdong (CN)
(72) Inventor: TU, FU-CHUAN, TAINAN CITY (TW)
(74) Representative: Lang, Christian

(57) **Abstract**

A screw structure is disclosed herein. The screw (1) for assembly in a screw cartridge (2) of a screw gun comprises a rod body (11), a head part (12) having a guide flange (121) radially disposed on a top thereof, and a thread part (14).

## Description

### BACKGROUND OF THE INVENTION

### 1. Field of the Invention

The present invention relates to provide a screw structure which can be directly filled in a screw cartridge of a screw gun without the needs for using a screw belt and inserting plural screws into the screw belt so as to save time and cost and prevent generation of wastes, e.g. a main part of the screw belt.

### 2. Description of Related Art

A screw is a type of fastener that is widely used to bond two objects. Generally, in order for easy use in a screw gun, the traditional screws are inserted into each of plural apertures which are spaced apart from each other on a main part of a screw belt. Then, the screws are disposed in a transmission member at a front end of the screw gun, allowing the head parts of the screws to contact a drill rod of the screw gun. In such a case, the screws are pushed out of the plural apertures of the screw belt and simultaneously driven by the drill rod to screw into an object, thereby bonding the two objects.

However, the above structure has many disadvantages that need to be solved. After the plural screws are all pushed out of the main part of the screw belt by the screw gun, the main part becomes the waste to be discarded, which results in waste of resources. The main part made of plastic is not decomposed or decayed after being buried, so the toxic gases are generated after incineration, which causes environmental pollution. In addition, in manufacturing a screw belt, plural screws must be sequentially inserted into plural apertures of the main part, which is time consuming and costly and may cause inconvenience in the subsequent screwing operation of the screw gun if the screws are not inserted properly due to few screws mixing or tilting insertion.

### SUMMARY OF THE INVENTION

In view of the above-mentioned problems, the object of the present invention is to provide a screw structure which can be directly filled in a screw cartridge of a screw gun without the needs for using a screw belt and inserting plural screws into the screw belt so as to save time and cost and prevent generation of wastes, e.g. a main part of the screw belt.

Disclosed herein is a screw structure. It mainly comprises a rod body having a first end and a second end; a head part integrally formed at the first end of the rod body and having a guide flange radially disposed on a top thereof; and a thread part longitudinally extended along the rod body.

According to an embodiment of the present invention, the head part further has a linking part in a curved shape and extended from the first end of the rod body to the guide flange.

According to an embodiment of the present invention, the head part is further provided with a contacting part between the guide flange and the linking part and having a diameter less than a diameter of the guide flange.

According to an embodiment of the present invention, the second end of the rod body is formed with a sharp tip.

According to an embodiment of the present invention, a top surface of the guide flange of the head part is formed with a bonding groove.

In use of the present invention, plural screws are directly filled in a screw cartridge of a screw gun so that the guide flanges of the head parts of the screws are connected to a guide grooves on two lateral walls of an accommodating slot. After the screws at a rear end of the screw cartridge is screwed to an object by a drill rod of the screw gun, the screws in the accommodating slot are pushed forwards by a feeding assembly of the screw cartridge. In such a case, the screws are slidably connected to the guide grooves on the two lateral walls of the accommodating slot by the guide flanges on the tops of their head parts and smoothly pushed forwards along the guide grooves to a front end of the screw cartridge for feeding so as to lock in an object.

By the design of the guide flange, the present invention can be directly filled in the screw cartridge of the screw gun without the use of a screw belt and without the need for inserting plural screws into the screw belt, which saves time and cost and prevents generation of wastes, e.g. a main part of the screw belt.

### BRIEF DESCRIPTION OF THE DRAWINGS

FIG. 1 is a stereogram showing a first embodiment for a screw structure according to the present invention;
FIG. 2 is a schematic diagram showing a screw structure in use according to the present invention;
FIG. 3 is a cross-sectional view showing a screw structure in use according to the present invention;
FIG. 4 is an enlarged cross-sectional view showing a screw structure in use according to the present invention;
FIG. 5 is a stereogram showing a second embodiment for a screw structure according to the present invention.

### DETAILED DESCRIPTION OF THE PREFERRED EMBODIMENT

Hereinafter, an exemplary embodiment of the present invention will be described in detail with reference to the accompanying drawings.

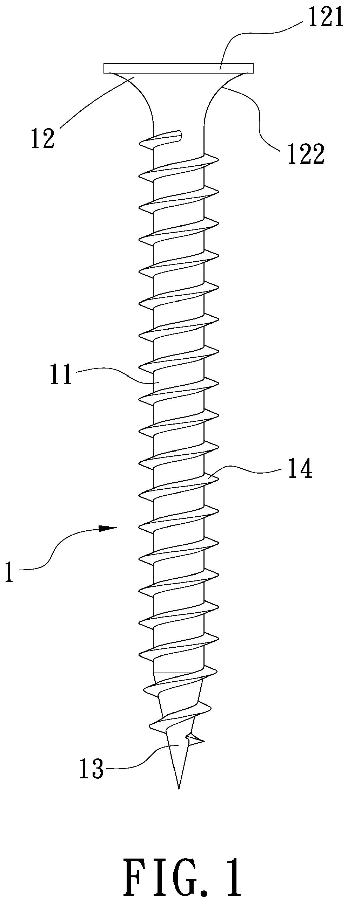

As showed in FIG. 1, a stereogram showing a first embodiment for a screw structure according to the present invention is disclosed herein. The screw (1) comprises a rod body (11) having a first end and a second end; a head part (12) integrally formed at the first end of the rod body (11); a sharp tip (13) formed at the second end of the rod body (11); and a thread part (14) longitudinally extended along the rod body (11). The characteristic is that the head part (12) has a guide flange (121) radially disposed on its top and a linking part (122) in a curved shape and extended from the first end of the rod body (11) to the guide flange (121). Furthermore, a top surface of the guide flange (121) of the head part (12) is formed with a bonding groove.

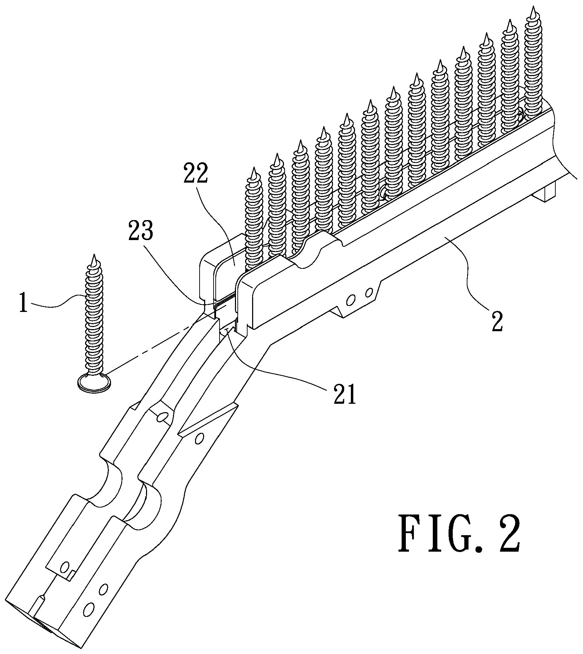

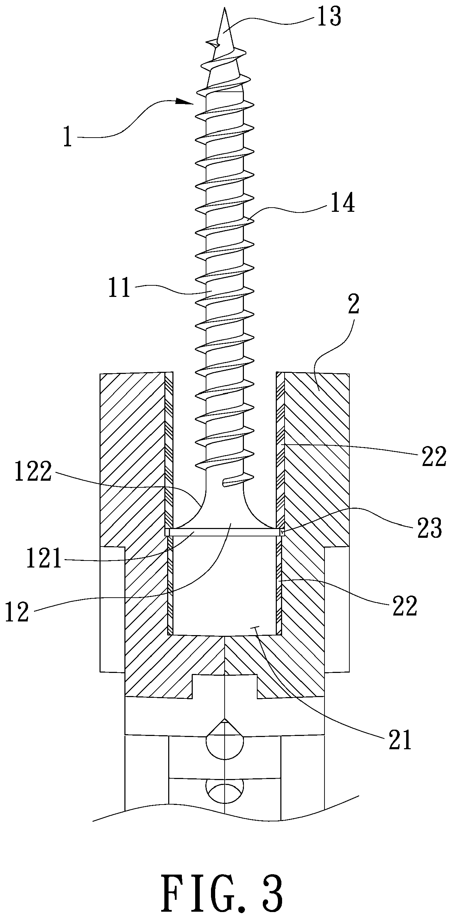

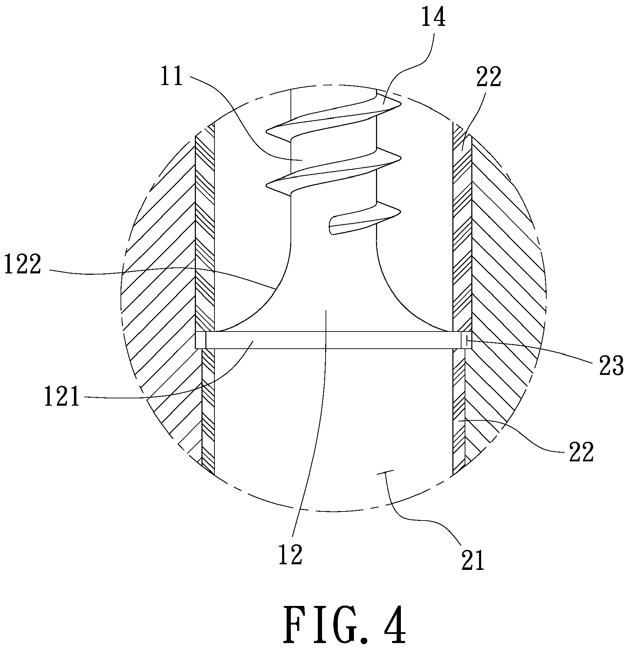

Referring to FIG. 2, FIG. 3 and FIG. 4, in use of the present invention, plural screws (1) are directly filled in an accommodating slot (21) of a screw cartridge (2) of a screw gun. An upper side and a lower side of each of two lateral walls of the accommodating slot (21) are respectively provided with a guide sheet (22) which is arranged along the accommodating slot (21). Furthermore, a guide groove (23) is formed at an interval between the upper and the lower guide sheets (22) of each of the two lateral walls. In such a case, the guide flanges (121) on the tops of the head parts (12) of the plural screws (1) are slidably connected to the two guide grooves (23) on the two lateral walls of the accommodating slot (21). After the plural screws (1) are filled, they can be used to lock an object.

In locking the object, a screw die head disposed at a front end of the screw cartridge (2) of the screw gun is in contact with a surface of the object. Then, an end part of a drill rod of the screw gun formed with a "single-line (-)" shape or a "cross (+)" shape is positioned in the bonding groove disposed on the top surface of the guide flange (121) of the head part (12) of the screw (1) and formed with a "single-line (-)" shape or a "cross (+)" shape. In such a case, the plural screws (1) can be driven to rotate by the rotation of the drill rod, continuously pushed by the drill rod, and finally separated from the screw die head at the front end of the screw cartridge (2) to screw into the object.

After the screw (1) clamped by the screw die head at the front end of the screw cartridge (2) is detached from the screw die head, the next screw (1) in the accommodating slot (21) is pushed forwards by a feeding assembly at a rear end of the screw cartridge (2). By a slidable connection of the guide flange (121) on the top of the head part (12) of the screw (1) to the guide grooves (23) on the two lateral walls of the accommodating slot (21), the screw (1) is smoothly pushed forwards along the guide grooves (23) on the two lateral walls of the accommodating slot (21) to the front end of the screw cartridge (2) for feeding so that the screw (1) fall into the screw die head to be further pushed by the drill rod to screw into the object.

Accordingly, the design of the guide flange (121) on the tops of their head parts (12) allows the screw (1) of the present invention to be directly filled in the screw cartridge (2) of the screw gun without the use of a screw belt and without the need for inserting plural screws (1) into the screw belt and to be smoothly pushed forwards along the guide grooves (23) on the two lateral walls of the accommodating slot (21) to the front end of the screw cartridge (2) for feeding, which save time and cost, prevent inconvenience in the subsequent screwing operation of the screw gun due to few screws mixing or tilting insertion, and prevent generation of wastes, e.g. a main part of the screw belt.

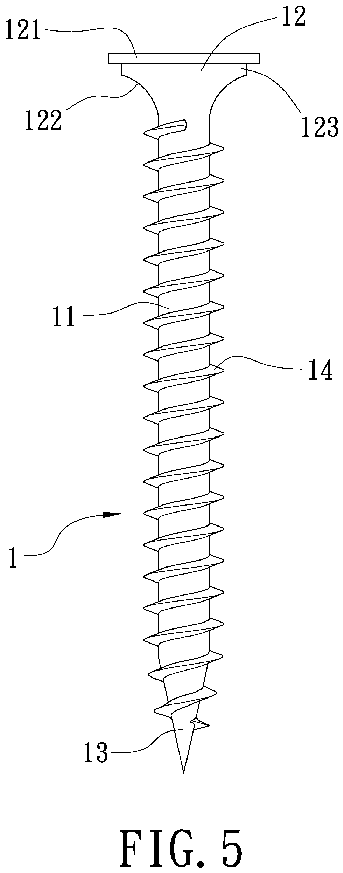

Referring to FIG. 5, a stereogram showing a second embodiment for a screw structure according to the present invention is disclosed. The head part (12) of the screw (1) is further provided with a contacting part (123) between the guide flange (121) and the linking part (122). The contacting part (123) has a diameter less than a diameter of the guide flange (121). Additionally, when the plural screws (1) are filled in the accommodating slot (21) of the screw cartridge (2) of the screw gun, the guide flanges (121) on the tops of the head parts (12) of the plural screws (1) are slidably connected to the two guide grooves (23) on the two lateral walls of the accommodating slot (21), and the contacting parts (123) of the head parts (12) are in contact with the guide sheets (22) on the two lateral walls of the accommodating slot (21) so as to further improve the stability of feeding the screws (1).

## Claims

1. A screw structure, comprising:
a rod body (11) having a first end and a second end;
a head part (12) integrally formed at the first end of the rod body (11) and having a guide flange (121) radially disposed on a top thereof; and
a thread part (14) longitudinally extended along the rod body (11).

2. The screw structure as claimed in claim 1, wherein the head part (12) further has a linking part (122) in a curved shape and extended from the first end of the rod body (11)to the guide flange (121).

3. The screw structure as claimed in claim 2, wherein the head part (12) is further provided with a contacting part (123) between the guide flange (121) and the linking part (122) and having a diameter less than a diameter of the guide flange (121).

4. The screw structure as claimed in claim 1, wherein the second end of the rod body (11) is formed with a sharp tip (13).
